# EUROPEAN PATENT APPLICATION

(11) **EP 4 838 325 A1**
(43) Date of publication of application: **11.11.2026**
(21) Application number: 26177483.0
(22) Date of filing: 08.05.2026
(51) Int. Cl.: G05B 23/02

(54) **DOMAIN KNOWLEDGE AND MACHINE-LEARNING-BASED CLASSIFICATION OF BUILDING EQUIPMENT HEALTH**

(30) Priority: 08.05.2025 IN 202511044648; 23.06.2025 US 202519246491
(71) Applicant: Honeywell International Inc., Charlotte, NC 28202 (US)
(72) Inventor: ROJICEK, Jiri, Charlotte, 28202 (US); SIKORA, Marek, Charlotte, 28202 (US); M, Karthika, Charlotte, 28202 (US)
(74) Representative: Wilsher, John James

(57) **Abstract**

An example method for domain knowledge and machine-learning-based classification of building equipment health comprises: receiving actual performance data associated with a building equipment; generating domain knowledge based key performance indicators (KPIs) of the building equipment based at least on the received actual performance data; querying a classifier trained on domain knowledge and static knowledge for the building equipment with at least a subset of the domain knowledge based KPIs to classify a health status of the building equipment as one or more predefined classification categories, and generating a recommended action based on the one or more predefined classification categories of the health status of the building equipment.

## Description

### Related Applications

This application claims the benefit of Indian Provisional Application No. 202511044648, filed May 8, 2025, which application is incorporated by reference herein.

### Technical Field

The present disclosure relates to systems, devices, and methods for domain knowledge and machine-learning-based classification of building equipment health.

### Background

Industrial process control and automation systems manage large, complex processes by integrating sensors, actuators, and hierarchically arranged controllers. Lower-level controllers collect sensor measurements and generate actuation signals, while higher-level controllers handle planning, scheduling, and optimization tasks. Human operators monitor alerts and alarms, adjust setpoints, or trigger maintenance activities to keep processes within safe and efficient limits. In building management systems (BMS), maintaining the health of critical equipment such as HVAC units, pumps, and heat exchangers is vital, since failures can rapidly escalate into emergencies or costly downtime.

These systems demand regular upkeep and swift responses to equipment faults. A variety of personnel such as process operators, maintenance and control engineers, field technicians-coordinate to diagnose issues and perform repairs. Relying solely on reactive maintenance (i.e., fixing failures after they occur) often incurs extended downtime, higher labor and replacement costs, and discomfort for building occupants (for example, thermal discomfort caused by HVAC outages). By contrast, proactive maintenance based on early fault detection can minimize disruptions and costs.

Although many dashboards now display real-time status and historical performance data, forecasting when equipment will require service still typically involves manual analysis of sensor logs, occupancy schedules, and other operational records. This labor-intensive process is prone to errors, leading to unexpected breakdowns and suboptimal asset utilization. Some prior methods attempt predictive maintenance using predefined rules such as alarm thresholds or fixed operating-hour limits but these are often inflexible and fail to account for varying operating conditions.

In practice, complex assets like HVAC systems can degrade in multiple ways, and single-fault detection does not capture overall health. Technicians rely on decades of domain expertise to interpret building equipment performance and configure control settings (for example, fan curves for air-handler units) accordingly for the building equipment. This reliance on individual knowledge is neither scalable nor sustainable, particularly as experienced staff retire or rotate assignments.

Accordingly, there is a need for automated monitoring and predictive-maintenance solutions that embed comprehensive domain expertise. Such systems would improve the accuracy and efficiency of maintenance decisions, preserve institutional knowledge, and ensure optimal performance and energy efficiency across building management platforms.

### Summary

The present disclosure relates generally to systems and methods for classifying the health status of building equipment, such as heating, ventilation, and air conditioning (HVAC) systems. More particularly, the disclosure pertains to AI-based classification systems that leverage domain-specific knowledge in the form of physics-based key performance indicators (KPIs) to assess and categorize building equipment health. As mentioned, conventional diagnostic methods for building equipment health assessment often rely on the detection of individual anomalies or apply machine learning models directly to raw telemetry or sensor data. However, such approaches face challenges due to the complex, multifaceted nature of equipment degradation and may require extensive training data and specialized domain modeling (e.g., heat transfer, fluid dynamics). For instance, such approaches may necessitate models trained based on various physical phenomena such as basic physics principles..

The present disclosure overcomes these limitations by utilizing domain-informed KPIs as feature inputs to AI classification models. The KPIs, unlike raw telemetry data, inherently encapsulate relevant domain knowledge related to building equipment performance and health, thus obviating the need for the classification models to learn physical principles from scratch. As a result, the disclosed systems and methods can achieve enhanced accuracy and interpretability with reduced training data requirements. The KPIs used in the system include, but are not limited to: domain-based operational KPIs: such as indicators of continuous operation (e.g., 24/7 runtime), clogged filters, and/or incorrect setpoints; domain-based capital KPIs: such as indicators related to equipment longevity, frequent cycling, and/or unstable control behavior; and static equipment parameters: including equipment type, equipment cost, equipment size, equipment criticality, equipment redundancy, and/or a physical location of equipment.

In some embodiments, the system supplements KPI inputs with additional domain knowledge such as operator-provided domain knowledge. This may be obtained by prompting users (e.g., building operators) with one or more predefined questions regarding the status of specific equipment, zones, rooms, or entire buildings. These inquiries may solicit high-level feedback (e.g., "Is the building operating normally?") rather than detailed diagnostic responses, thereby reducing the cognitive burden on the operator and improving operator response rates. This approach is particularly beneficial in large-scale deployments where operators may oversee dozens of buildings and lack detailed familiarity with each piece of equipment and/or each building. Additionally, this approach is beneficial because the technician may not always be permitted or have the time to directly assess a building equipment issue (e.g., through in-person verification). As a result, any detailed input from the technician such as information about the root cause or the nature of the issue may inadvertently mislead further analysis, particularly when training a machine learning model. The system can further comprise a feedback loop wherein user-provided validation or correction of system-generated classifications is used to iteratively refine the AI classification models over time. Feedback may pertain to the appropriateness of assigned health categories, the outcome of subsequent maintenance actions, and/or other post-classification observations. This closed-loop architecture enables continuous improvement of the classification accuracy.

Unlike traditional methods that express equipment health as numerical scores (e.g., 78% health), the disclosed system employs categorical labels such as: "No Action Required", "Plan Maintenance", "Immediate Action Required", and "Needs Review". As detailed herein, the use of categorical classifications rather than the use of numerical scores or percentages provides several advantages including: enhanced actionability (e.g., facilitates maintenance planning by mapping directly to actionable tasks), improved alignment with human decision-making (e.g., technicians can more intuitively respond to action categories than abstract numerical scores), streamlined feedback collection (e.g., simplifies user input by allowing selection of predefined categories, reduced false precision (e.g., avoids the misleading appearance of accuracy inherent in percentage scores, and/or yields improved communication (e.g., establishes a standardized vocabulary for status reporting across organizational stakeholders).

Accordingly, the systems and method herein permit scalable, interpretable, and domain-informed classification of building equipment health. By incorporating expert knowledge through KPIs and operator interaction, the system preserves institutional expertise which is particularly valuable as experienced personnel retire, while also facilitating more efficient, accurate, and scalable AI-based equipment maintenance and monitoring. Thus, the systems, devices, and methods herein detect and predict an occurrence of building equipment failures with improved accuracy e.g., due to the use of domain knowledge, particularly over an extended period of time and with retraining of the machine-learning models herein with additional domain knowledge. Building equipment operation can therefore be quantified, evaluated, and remediated in various manners and/or with a level of accuracy which were not previously possible with other approaches. For instance, the systems, methods, and devices herein can yield real-time key performance metrics (e.g., a quantity, a type, and/or a status of both real-time building equipment failures over a period of time that may occur and along with the predicted building equipment failures for a future period of time). Moreover, the approaches herein yield enhanced (e.g., proactive, timely, consistent, and effective) building equipment failure resolution (e.g., autocorrection of building equipment failures), as detailed herein. The resultant benefits mentioned herein can yield safer and more effective building management and thereby can improve the efficiency and operation of various components (e.g., equipment) in the site. Moreover, the systems, devices, and methods herein can readily determine a root or contributory cause (e.g., another failure with building equipment that is located upstream/downstream in a building equipment hierarchy) of a detected or predicted building equipment failure.

At least in view of the above, the system, devices, and methods herein, can mitigate downtime, repair/replacement costs, and/or any impact on tenants or occupants of buildings, as compared to other approaches so as those that rely solely on reactive maintenance or do not incorporate domain knowledge and/or static knowledge when identifying building equipment issues.

As used herein, a building equipment failure refers to a malfunction or breakdown of systems or devices that are integral to the operation and maintenance of a building's infrastructure such as those that are monitored by a building management system (BMS). Examples of building equipment include heating, ventilation, and air conditioning (HVAC) systems (e.g., chillers, etc.), lighting systems, security and surveillance systems, fire safety systems, plumbing and water systems, energy management systems, and transportation systems (e.g., escalators, elevators, etc.), among others. Examples of building equipment failures include an HVAC failure such as when a heating or cooling system stops functioning, resulting in uncomfortable or unsafe temperature conditions, an electrical failure such as when a power supply to lighting or security systems is interrupted, a sensor malfunction such as when a temperature, humidity, and/or occupancy sensors may fail to provide accurate data (e.g., leading to improper system responses), and/or an energy equipment failure such as a failure of a solar panels or energy storage system (e.g., leading to inefficient energy use). However, embodiments of the present disclosure are not limited to these examples. The building equipment failures may occur at a site. For instance, a site can be a single building or facility, a plurality (e.g., group) of buildings, an area (e.g., room(s), space(s), zone(s), etc.) within a building or facility, or a campus of an organization. Embodiments of the present disclosure are not limited to these examples.

A particular example of the present disclosure includes a method for domain knowledge and machine-learning-based classification of building equipment health, the method comprising: receiving actual performance data associated with a building equipment; generating domain knowledge based KPIs of the building equipment based at least on the received actual performance data; querying a classifier trained on domain knowledge and static knowledge for the building equipment with at least a subset of the domain knowledge based KPIs to classify a health status of the building equipment as one or more predefined classification categories, wherein the domain knowledge includes one or more of a history of the building equipment, an expected performance of the type of building equipment, feedback from an operator associated with the building equipment, annotated data from the building equipment, or any combination thereof; and generating a recommended action based on the one or more predefined classification categories of the health status of the building equipment.

Another example of the present disclosure includes a system for domain knowledge and machine-learning-based classification of building equipment health, the system comprising: a processor; a memory storing non-transitory instructions which are executable by the processor to: train a classifier with domain knowledge associated with building equipment and static knowledge associated with the building equipment, wherein the static knowledge includes one or more building equipment parameters including building equipment criticality, building equipment type, building equipment location, building equipment size, or any combination thereof; receive building equipment data including operational parameters associated with an building equipment; generate domain knowledge-based KPIs of the building equipment based at least on the received building equipment data; receive a selection of a subset of the domain knowledge-based KPIs; query a classifier trained on domain knowledge and static knowledge for the building equipment with the subset of the domain knowledge based KPIs to classify a health status of the building equipment as one or more predefined classification categories; and generate a recommended action based on the one or more predefined classification categories of the health status of the building equipment.

Another example of the present disclosure includes a non-transitory, computer-readable medium including instructions that when executed by a processor cause the processor to: receive building equipment data including operational parameters associated with an building equipment; generate domain knowledge-based KPIs of the building equipment based on the received building equipment data; receive a user selection of one or more of the domain knowledge-based KPIs; query a classifier trained on domain knowledge and static knowledge for the building equipment with the selected one or more of the domain knowledge-based KPIs to classify a health status of the building equipment as one or more predefined categories, wherein: the domain knowledge is based at least in part based on: one of more of the domain knowledge-based KPIs; and periodic feedback received from an operator associated with the building equipment, and the static knowledge includes an indicator of building equipment criticality, building equipment location, building equipment size, building equipment type, or any combination thereof; generate a recommended action based on the one or more predefined categories; and acknowledge or initiate performance of the recommended action.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
FIG. 1 is a schematic block diagram of an illustrative industrial process control and automation system;
FIG. 2 is an example computing device for domain knowledge and machine-learning-based classification of building equipment health;
FIG. 3 is an example of a flow diagram showing an illustrative process for domain knowledge and machine-learning-based classification of building equipment health with a trained classifier;
FIG. 4 is an example of a flow diagram showing an illustrative process of training a classifier suitable for domain knowledge and machine-learning-based classification of building equipment health;
FIG. 5 is an example of a flow diagram showing another illustrative process for domain knowledge and machine-learning-based classification of building equipment health; and
FIG. 6 is a flow diagram showing an illustrative method for domain knowledge and machine-learning-based classification of building equipment health.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

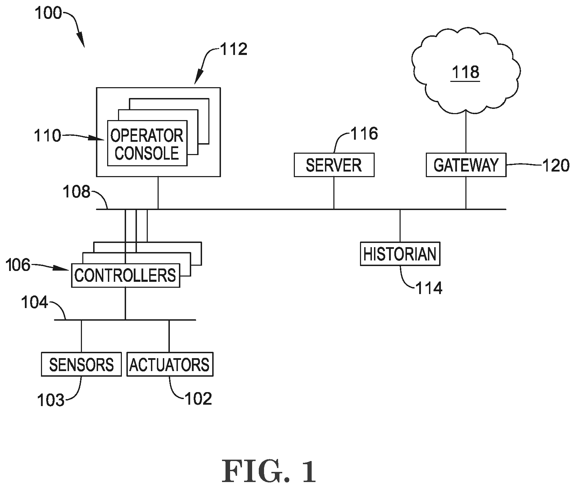

FIG. 1 provides a schematic block diagram showing an illustrative industrial process control and automation system 100. The system 100 includes various components that facilitate production or processing of at least one product or other material. For instance, the system 100 can be used to facilitate control over components in one or multiple industrial plants. The industrial plants may be one or more processing facilities (or one or more portions thereof), such as one or more manufacturing facilities for producing at least one product or other material. In general, the industrial plants may implement one or more industrial processes and can individually or collectively be referred to as a process system. A process system generally represents any system or portion thereof configured to process one or more products or other materials in some manner.

The system 100 includes one or more sensors 103 and one or more actuators 102. The sensors 103 and the actuators 102 represent components in a process system that may perform any of a wide variety of functions. In certain embodiments, sensors 103 and actuators 102 can correspond to equipment that is controlled by the automation system. That is, the sensors 103 and actuators 102 represent components in the industrial plant that perform any of a wide variety of functions. For example, sensors and actuators can measure various characteristics of the process system as well as alter any number of characteristics in the process system of the industrial plant represented by the system 100. The sensors 103 and actuators 102 can be automatically controlled by the process system of the industrial plant (e.g., to permit autocorrection of building equipment failures, as detailed herein), manually controlled, or a combination thereof. The control and manipulation of the sensors 103 by the personnel or the process system of the industrial plant, or the combination thereof can be recorded by the historian, discussed in further detail below. For example, each time the sensors 103 and actuators 102 are adjusted, a record is created within the historian. The sensors 103 may measure a wide variety of characteristics in the process system, such as but not limited to temperature, pressure, flow rate, chemical concentrations, or a voltage transmitted through an electrical conductor. The actuators 102 may represent devices that are configured to alter a wide variety of characteristics in the process system. As an example, the actuators 102 may open or close one or more valves, or increase or decrease a process set point or the like. At any rate, each sensor 103 may include any suitable structure for measuring one or more characteristics in a process system. Each actuator 102 may include any suitable structure for operating on or affecting one or more conditions of a process system.

In the example shown, a network 104 is coupled to the sensors 103 and the actuators 102. The network 104 facilitates interaction with the sensors 103 and the actuator 102. For example, the network 104 may transmit measurement data from the sensors 103 and/or may provide control signals to the actuator 102. The network 104 may represent any suitable network or combination of networks. As particular examples, the network 104 could represent at least one Ethernet network (such as one supporting a FOUNDATION FIELDBUS protocol), electrical signal network (such as a HART network), Ethernet network, pneumatic control signal network, or any other or additional type(s) of network(s), or any other type of communication path.

The illustrative system 100 also includes various controllers 106. The controllers 106 may, for example, be used in the system 100 to perform various functions in order to control one or more industrial processes. To illustrate, a first set of controllers 106 may use measurements from one or more of the sensors 103 to control the operation of one or more of the actuators 102. A controller 18 may receive measurement data from one or more sensors 103 and use the measurement data to generate control signals for one or more actuators 102. A second set of controllers 106 may be used to optimize the control logic or other operations performed by the first set of controllers. A third set of controllers 106 could be used to perform additional functions. The controllers 106 could therefore support a combination of approaches, such as regulatory control, advanced regulatory control, supervisory control, and advanced process control.

Each of the controllers 106 may include any suitable structure for controlling one or more aspects of an industrial process. At least some of the controllers 106 may, for example, represent proportional-integral-derivative (PID) controllers or multivariable controllers, such as controllers implementing model predictive control (MPC) or other advanced predictive control (APC). As a particular example, each controller of the controllers 106 may represent a computing device running a real-time operating system, a WINDOWS operating system, or other operating system.

In the illustrative system 100, at least one network 108 couples to the controllers 106 and the other devices in the system 100. The network 108 facilitates communication of information between components. The network 108 may represent any suitable network or combination of networks. For example, the network 108 could represent an Ethernet network or any other suitable communication path.

Operator access to and interaction with the controllers 106 and other components of the system 100 can occur via various operator consoles 110. Each operator console 110 may be used to provide information to an operator and receive information from an operator. For example, each operator console 110 may provide information identifying a current state of an industrial process to the operator, such as values of various process variables and warnings, alarms, or other states associated with the industrial process. Each operator console of the operator consoles 110 may also receive information affecting how the industrial process is controlled, such as by receiving set points or control modes for process variables controlled by the controllers 106 or other information that alters or affects how the controllers 106 control the industrial process. Each operator console 110 may include any suitable structure for displaying information to and interacting with an operator. For example, each operator console 110 may represent a computing device running a WINDOWS operating system or other operating system. In some embodiments, the operator console 110 can be configured to display the dashboards described herein. Alternatively or additionally, the dashboards described herein can be displayed elsewhere, for instance, at a console associated with a supervisor or other personal associated with the industrial plant.

Multiple operator consoles 110 may be grouped together and used in one or more control rooms 112. Each control room 112 may include any number of operator consoles 110 in any suitable arrangement. In some cases, multiple control rooms 112 may be used to control an industrial plant, such as when each control room 112 contains operator consoles 110 used to manage a discrete part of the industrial process/plant.

The illustrative system 100 also includes one or more servers 116. Each server 116 denotes a computing device that executes applications for users of the operator consoles 110 or other applications. The applications could be used to support various functions for the operator consoles 110, the controllers 106, or other components of the system 100. The servers 116 may be located locally or remotely from the illustrative system 100. For instance, the functionality of the server 116 could be implemented in a computing cloud or a remote server communicatively coupled to the system 100 via a gateway such as gateway 120. Each server 116 may represent a computing device running a WINDOWS operating system or other operating system. Note that while shown as being local within the system 100, the functionality of the server 116 may be remote from the system 100. For instance, the functionality of the server 116 may be implemented in a cloud-based server 118 or a remote server communicatively coupled to the system 100 via the gateway 120.

The control and automation system 100 here also includes at least one historian 114. The historian 114 represents a component that stores various information about the system 100. The historian 114 could, for instance, store information that is generated by the various controllers and/or various operators, etc. during the control of one or more industrial processes. The historian 114 includes any suitable structure for storing and facilitating retrieval of information such as a volatile and/or non-volatile memory. Although shown as a single component here, the historian 114 could be located elsewhere in the system 100, or multiple historians could be distributed in different locations in the system 100.

Although FIG. 1 shows one example of the industrial process control and automation system 100, it will be appreciated that various changes may be made. For example, the control and automation system 100 may include any number of sensors, actuators, controllers, servers, networks, operator stations, operator consoles, control rooms, networks, and other components. Also, the makeup and arrangement of the system 100 in FIG. 1 is for illustration only. Components may be added, omitted, combined, further subdivided, or placed in any other suitable configuration according to particular needs. Further, particular functions have been described as being performed by particular components of the system 100. This is for illustration only. In general, control and automation systems are highly configurable and can be configured in any suitable manner according to particular needs. In addition, FIG. 1 illustrates one example operational environment of an industrial plant where system operations done by the various personnel can be monitored. This functionality can be used in any other suitable system, and that system need not be used for industrial process control and automation.

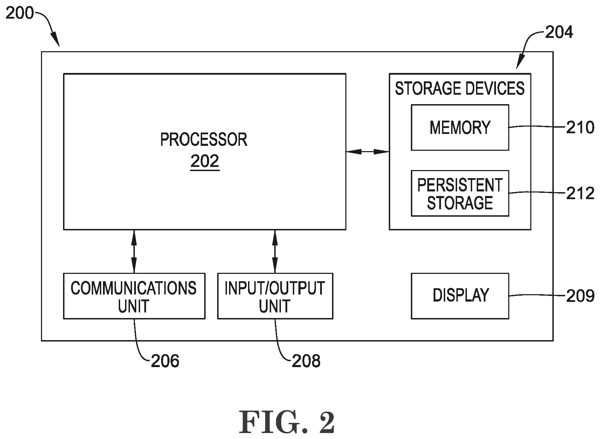

FIG. 2 illustrates an example computing device for domain knowledge and machine-learning-based classification of building equipment health. In particular, FIG. 2 illustrates an example computing device 200. In some embodiments, the computing device 200 could denote an operator station, server, a remote server or device, or a mobile device. The computing device 200 could be used to run applications. The computing device 200 could be used to perform one or more functions, such as collecting information, sorting and analyzing the information as well as generating a report of the analysis, and/or initiating remediation (e.g., initiating an autocorrection and/or manual remediation) of an identified building equipment failure (e.g., an occurrence of a current or future building equipment failure for a future time period, etc.). For ease of explanation, and the computing device 200 are described as being used in the system 100 of FIG. 1, although the computing device 200 could be used in any other suitable system (whether or not related to industrial process control and automation).

As shown in FIG. 2, the computing device 200 includes at least one processor 202, at least one storage device 204, at least one communications unit 206, and at least one input/output (I/O) unit 208. Each processor 202 can execute instructions, such as those that may be loaded into a memory 210. Each processor 202 denotes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) configured to store and facilitate retrieval of information (such as data, program code, and/or other suitable information on a temporary or permanent basis). The memory 210 may represent a random-access memory or any other suitable volatile or non-volatile storage device(s). The persistent storage 212 may contain one or more components or devices supporting longer-term storage of data, such as a read-only memory, hard drive, flash memory, or optical disc.

The communications unit 206 supports communications with other systems or devices. For example, the communications unit 206 could include at least one network interface card or wireless transceiver facilitating communications over at least one wired or wireless network (such as a local intranet or a public network like the Internet). The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display such as a display 209, printer, or other suitable output device.

The display 209 allows at least output of data. In some instances, the display 209 corresponds to a monitor. In some embodiments, the display 209 corresponds to a touch screen display that allows input and output of data.

Although FIG. 2 illustrates example computing device 200 capable of facilitating or otherwise performing at least some aspects of domain knowledge and machine-learning-based classification of building equipment health, changes may be made to FIG. 2. For example, various components in FIG. 2 could be combined, further subdivided, or omitted, and additional components could be added according to particular needs. As a particular example, processor 202 can be divided into multiple processors (e.g., hardware processors), such as one or more central processing units (CPUs) and one or more graphics processing units (GPUs). Also, computing device 200 can come in a wide variety of configurations, and FIG. 2 does not limit this disclosure to any particular computing device or mobile device.

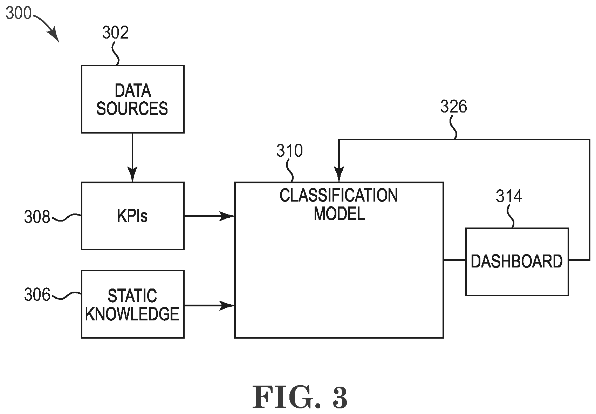

FIG. 3 is an example of a flow diagram 300 showing an illustrative process flow for domain knowledge and machine-learning-based classification of building equipment health. At 302, the flow diagram 300 includes receiving, by a computing device (e.g., computing device 200 as described with respect to FIG. 2) data from one or more data sources (e.g., the historian 114 of FIG. 2). The data can be received continuously, periodically (e.g., each minute, each hour, each day, etc.), and/or can be received responsive to an input (e.g., responsive to an input by a site supervisor to a computing device such as the computing device 200, as described with respect to FIG. 2). In some embodiments, the data can include intermittent (e.g., influx) and/or periodic data (e.g., end of month (EOM) data from one or more of the data sources described herein.

The data can correspond to real-time (e.g., real-time telemetry data) or stored real world data (e.g., stored telemetry data) received from one or more data sources that is indicative of actual performance and/or actual operating conditions associated with building equipment at a site. Examples of the one or more data sources include a building management system (BMS), an access control system, a scheduling system, a video surveillance system, a weather forecasting system, a scheduling system, a maintenance log system, or any combination thereof. In some embodiments, the one or more data sources can include data from one or more internet-of-things (IOT) devices such as proximity or occupancy sensors, smart sockets, etc.

As used herein, an access control system refers to a system that monitors and regulates entry to physical spaces, combining hardware (card readers, keypads) with software for centralized control, enhanced security, and integration with other building systems. A scheduling system refers to automates and optimizes the operation of various building systems based on preset schedules. Scheduling systems allow building managers or facility operators to program and manage the timing of activities such as heating, ventilation, and air conditioning (HVAC), lighting, security, and other building services to enhance energy efficiency, comfort, and operational effectiveness. A maintenance log system refers to a digital tool used to manage, track, and optimize the maintenance of building equipment, ensuring efficient operations, minimizing downtime, and supporting long-term asset management. The maintenance log system can be integrated within the broader BMS platform to provide a comprehensive view of building performance and maintenance needs. The surveillance system uses cameras, video management software, and advanced analytics to monitor and secure buildings. The surveillance system can be integrated with other security and building management tools to provide centralized control, real-time monitoring, and enhanced building safety. An example of a surveillance system is PRO-WATCH^{™} available from HONEYWELL^{™}, Inc. A weather forecasting system refers to a technology used to integrate weather data with building management systems. This integration allows for optimized energy usage, enhanced safety, and more efficient operations by predicting and reacting to changing weather conditions.

In some embodiments, the data can be actual performance data received from a BMS associated with the site. For instance, the data received from the BMS can include actual telemetry data and/or operating condition data of one or more types of building equipment (e.g., elevators, HVAC systems, sensors, etc.) that are managed by the BMS.

In some embodiments, the data can include or be augmented with static information associated with a site and/or building equipment in a site. For instance, the static information can be provided separately, as indicated at 306. The static information can include various BMS data, blueprint or other type of physical layout information (e.g., piping and instrument diagrams, etc.). Examples of static information include a type of building equipment, a criticality of building equipment, a redundancy level, if any, of the building equipment, a size of the building equipment, a cost (e.g., a purchase price) of the building equipment, and/or a physical location of the building equipment (e.g., a physical location within a site, zone, and/or room, etc.). The static information can be determined at a time of onboarding the building equipment, among other possibilities. The static information can be stored in one or more locations such as the historian (e.g., the historian 114 illustrated in FIG. 1) and/or the cloud (e.g., the cloud 118 as illustrated in FIG. 1), among other possible storage locations. For instance, static information associated with some or all building equipment can be stored at a time of configuration or onboarding of the building equipment, among other possibilities. Additionally, it is noted that the static information may be subject to change. For instance, the criticality of a given asset may vary over time (e.g., as one or more assets are onboarded, etc.).

In some embodiments, the received data can undergo data integration (e.g., once received by a computing device such as the computing device 200 illustrated in FIG. 2) or can have already undergone data integration. Data integration can include data aggregation, data preprocessing, and/or data cleaning of the data from one or more data sources. In some embodiments, the data received from the data sources can undergo data preprocessing or cleaning, for instance, to make the data amenable for KPI generation and/or to make the data amenable for use in querying a machine-learning model, such as those described herein. The data preprocessing or cleaning can be employed to remove inaccuracies, inconsistencies, and irrelevant information from data from one or more data sources which, if present, can negatively impact predictions made based on the data. Aggregation, preprocessing, and/or cleaning of data from one or more data sources can be performed via a rule-based process and/or a machine-learning process. As used herein, the aggregated, preprocessed, and/or cleaned data can generally be referred to as a derivative of the received data (e.g., of the received read-world data). The aggregated data set (e.g., an aggregated, preprocessed, and cleaned data set) can be stored in a centralized platform, such as ENTERPRISE BUILDINGS INTEGRATOR^{™} and/or FORGE; available from HONEYWELL^{™}, Inc.

KPIs can be generated from the received data, as indicated at element 308. As an example, the KPIs in this system can be generated through a multi-step process that combines raw building data or a derivative thereof (e.g., cleaned telemetry data) with domain expertise (e.g., in the form of operator feedback, an expected building equipment performance, etc.). First, the system receives asset data including operational parameters like zone temperature, setpoint values, and cooling valve position measurements, for instance, from building equipment sensors. This raw telemetry data is then transformed into domain knowledge-based KPIs through feature evaluation that incorporates a physics-based understanding of the site (e.g., of HVAC systems at the site).

The systems herein can generate three main categories of KPIs in the form of operational KPIs, capital KPIs, and static information KPIs. Operational savings KPIs can be generated by analyzing patterns in the operational data to identify any issues like 24/7 operation, clogged filters, and incorrect setpoints. For example, the system can calculate temperature deviation KPIs by comparing actual zone temperatures against temperature setpoints, with deviations that are less than a threshold amount (e.g., less than absolute difference of a 0.5 °C, etc.) being normalized to zero and larger deviations being scaled to indicate severity. Capital savings KPIs can be created by evaluating equipment performance patterns that impact longevity, such as cycling frequency, control stability, and/or operational stress. The capital savings KPIs can therefore incorporate domain expertise about expected equipment behavior and wear patterns. Static information KPIs can be generated during equipment onboarding by capturing contextual parameters like asset criticality, redundancy levels, and/or served zone importance. This information becomes part of the building information model and may be mandatory in many jurisdictions.

Hence, the KPI generation processes herein can transform raw sensor data into physics-based indicators or KPIs that already incorporate domain knowledge about what constitutes normal versus problematic operation. This approach makes the subsequent machine learning classification based on these KPIs more efficient since the ML model does not need to learn basic physics principles from scratch (i.e., be trained with various physics based rules or data). That is, the KPIs can be used to train the models (e.g., the classification model), as detailed herein. Hence, these domain knowledge-based KPIs, along with static information like asset criticality and size, are then used as features to train a classification model 310 (i.e., a classifier). For example, the classification model 310 can be trained on KPI data that corresponds to a given period of time (e.g., 6 months) to establish a KPI baseline and thus the classification model 310 once trained at least on the KPI data and the static knowledge can subsequently detect any deviation and extent of such deviation from the KPI baselines. In some embodiments, the classification model can be an supervised machine learning model such as a supervised anomaly detection model. For purposes of this disclosure, an "anomaly detection model" is an unsupervised learning model designed to identify rare or unusual patterns in data that deviate significantly from the majority of observations. Examples of suitable anomaly detection models include ensemble-based model that isolates anomalies by partitioning the data, autoencoders which generally refer to neural networks that learn to compress and reconstruct normal data, with high reconstruction errors indicating anomalies, one-class SVM (Support Vector Machine) algorithms which generally refer to a machine-learning model that separates normal data points from potential anomalies and, LSTMs (Long Short-Term Memory networks) which are generally configured or trained to detecting anomalies in time series or sequential data.

The presence of the anomaly in combination with the relevant static knowledge can be used to determine one or more predetermined categories used to categorize building equipment health (e.g., the respective health of an individual building component experiencing or predicted to experience the anomaly). For instance, when the classifier detects an anomaly in the HVAC system's KPIs, the classifier can determine the appropriate classification category by considering both anomaly information (e.g., a type and/or severity of the anomaly) and the static information about the equipment. The static information, which includes asset criticality, asset size, and other contextual parameters, helps weight the significance of the detected anomaly. For example, if the classifier detects a performance deviation in a critical piece of equipment serving an essential zone, the static information about that equipment's high criticality would influence the classification toward a more urgent category like "immediate action" rather than "plan maintenance". Conversely, the same performance deviation in non-critical equipment might result in a less urgent classification due to its lower criticality rating in the static information. The system uses a scoring mechanism that combines the detected anomalies with the static information parameters to determine the final classification. This scoring process ensures that the classification outcome reflects both the technical severity of the issue and the operational importance of the affected building equipment.

As represented at 314, the information output from the classifier 310 can be provided to and displayed by a computing device such as those described herein. For instance, a computing device of a BMS can be configured to display in a dashboard or other application a health status of the building equipment as one or more predefined classification categories and/or a recommendation (e.g., including a recommended action and a recommended remediation deadline), a priority (e.g., low, high, etc.), among other possible information.

In some embodiments, the flow can include generation of a recommended action based on the one or more predefined classification categories of the health status of the building equipment. That is, the recommended action can be different than but derived from the classification categories. For instance, after the classifier determines a classification outcome (e.g., "no action", "plan maintenance", "immediate action"), the system herein may perform root cause analysis and/or provide a remediation action which is tailored to particular building equipment which then leads to a specific recommendation. For example, while the general health classification may be "plan maintenance", the actual recommended action would provide more specific guidance about what maintenance needs to be planned and any other relevant information (e.g., whether the remediation is an automatic remediation or manual remediation, etc.).

In some embodiments, the recommended action can include monitoring and/or remediating the building equipment. Remediation of the building equipment failure can be performed substantially immediately in some instances (e.g., in the case of an automatic remediation) or can be scheduled (e.g., via an electronic ticket system, etc.).

The remediation can be a manual remediation or an automatic remediation. As used herein an automatic remediation refers to a change in the operation of building equipment that is manifested automatically (in the absence of a manual action to implement the change). The automatic remediation can be implemented by conveying a signal (e.g., from a computing device such as those described herein) to one or more sensors and/or building equipment (e.g., the building equipment in need of remediation). Examples of automatic remediation of building equipment failures include changing a setpoint, changing a valve position, regulating airflow (e.g., via changing damper positions, etc.) or changing the temperature setpoints, adjusting or turning off lighting in various areas of a site, taking building equipment (e.g., one or more elevators) off-line, shutting off a water supply to building equipment (e.g., one or more sprinkler systems), triggering a lockdown of a portion (e.g., one or more rooms) and/or an entire site, altering data (e.g., BMS data) such as smoothing a signal to attenuate noise/variance in the signal, reducing or lowering power to one or more types of building equipment, updating firmware or software associate with building equipment and/or sensor, among types of automatic (closed loop) remediations. As used herein, a manual remediation refers to a change in the operation of building equipment that is manifested via one or more manual actions (e.g., performed directly on the building equipment and/or a sensor or other physical component associated with the building equipment). In some embodiments, a computing device can initiate a manual remediation, for instance, via generation of an alert (e.g., which is displayed to via a computing), generation of an electronic ticket (e.g., via an electronic ticketing system such as those which are typically employed in conjunction with a BMS), or both.

The remediation can be acknowledged (e.g., by an operator and/or by the system herein) and/or can be initiated (e.g., by the operator or automatically by the systems herein). In various embodiments, the automatic remediation can be initiated by automatically initiating a closed-loop control action. As used herein, a closed-loop action refers to a feedback mechanism that ensures building equipment failures or improvements identified in a process are addressed systematically and efficiently. For instance, when a building equipment failure is detected, a closed-loop system can be configured to track the building equipment failure, investigate the root cause, and implement corrective measures. The "loop" can be considered closed when the failure has been resolved, and the effectiveness of the remediation has been confirmed, e.g., one or more of the feedback loops described herein. Hence, the closed loop remediations herein can promote aspects herein such as promoting continuous improvement with regard to domain knowledge and machine-learning-based classification of building equipment health.

For instance, responsive to completion of the remediation, feedback associated with the automatic remediation can be provided and/or conveyed to the classifier 310. For example, performance of the building equipment can be measured prior to, during, and/or after performing the automatic remediation to automatically infer an effectiveness of the automatic remediation and/or to yield additional data (e.g., BMS data that is automatically labeled or categorized to indicate an effectiveness of the automatic remediation) for training of one or more of the machine-learning models herein.

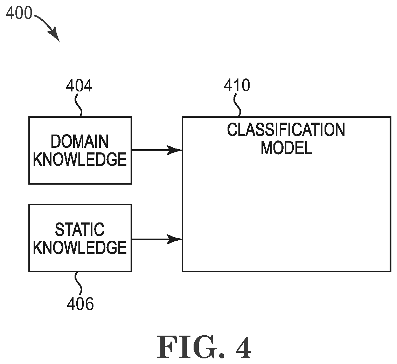

For instance, FIG. 4 is an example of a flow diagram showing an illustrative process 400 of training a classifier suitable for domain knowledge and machine-learning-based classification of building equipment health. A classifier 410 can be trained on domain knowledge and static knowledge, as indicated at elements 404 and 406, respectively.

The static knowledge can include one or more building equipment parameters including building equipment criticality, building equipment type, building equipment location, building equipment size, or any combination thereof, as described herein.

The domain knowledge can include domain knowledge-based KPIs, building control strategy (i.e., building control sequences), a history of the building equipment, an expected performance of the type of building equipment, feedback from an operator associated with the building equipment, annotated data from the building equipment, or any combination thereof. For instance, the classifier 410 can be trained on domain knowledge-based KPIs, as described herein.

In some embodiments, the classifier can be trained with domain knowledge from one or more additional sources (e.g., in addition to the domain knowledge-based KPIs and static knowledge). For instance, the classifier 410 can be trained on a history of the building equipment (e.g., past telemetry and/or past KPI data, etc.), an expected performance (e.g., a set point) of the type of building equipment, feedback from an operator associated with the building equipment, annotated data (e.g., annotated telemetry data or annotated KPI data) from the building equipment, or any combination thereof. In this way, the classifier can be trained with additional domain knowledge that can be indicative of the typical or expected performance of the building equipment. The additional domain knowledge can be used in conjunction with the domain knowledge-based KPIs and static information to train the models herein such as the classifier 410. Training the models herein one the additional domain knowledge (e.g., operator feedback) along with the KPIs and the static knowledge yields improved (more accurate) classification, as compared to other approaches such as those that do not account for operator feedback such as operator feedback responsive to a prompt to provide a general status of building equipment at that point in time (e.g., rather than other approaches which may only solicitate operator feedback responsive to an occurrence of a building equipment issue or occurrence of another condition such as responsive to an output from a model).

For example, training on operator feedback represents an important aspect in the domain knowledge-based classification system. This feature creates a continuous improvement mechanism that enhances the system's accuracy and relevance over time while preserving valuable domain expertise. The operator feedback may be provided in response to a prompt (e.g., on a screen of the computing device 200) provided to the operator to access a status of the system. The prompt may be provided periodically (e.g., for the operator to access a general status of the building equipment) and/or may be provided responsive to an output from the models herein (e.g., responsive to a classification of the health of the building equipment), among other possibilities. For example, the operator may periodically (e.g., each hour, each day, etc.) or intermittently be provided with a prompt to describe the health of one or more building equipment components. The operator can then respond to the prompt and the response can be used to train or retrain the classifier 410. For instance, in some embodiment the operator can be provided with a prompt to described the current (real-time) health of one or more building equipment components (e.g., a prompt to describe the general health of a room, zone, of even an entire site including one or more building equipment components). The prompt can include one or predefined response options that are selectable by the operator such as "no issues" or "experiencing an issue", etc. The use of these predefined prompts can promote aspects herein. For instance, the use of predefined prompts creates, rather than free text, can increase the likelihood of a response from the operator and can ease or otherwise promote training or retraining of the model with the responses (e.g., creates a structured dataset as compared to free-text responses whose content may not be structured and thus may not be readily recognizable to the models). For example, the operator responses can be correlated (e.g., based on a given time at which the operator response is received) with building equipment data (e.g., telemetry data) received before and/or at the time of receipt of the operator response to form a data set including the operator response and the corresponding building equipment data which can be used to train or retrain the models herein.

An example method for training a building equipment health classification system (i.e., the classifier) can include periodically prompting an operator with a general status inquiry about building equipment health at a point in time, wherein the general status inquiry comprises one or more predefined response options, receiving operator feedback selecting at least one of the predefined response options, associating the received operator feedback with building equipment telemetry data collected at the point in time to create a labeled training dataset; training a classifier using the labeled training dataset. Continuing with this example, the classifier can be configured to: receive domain knowledge-based KPIs generated from building equipment operational parameters; and classify a health status of the building equipment into one or more predefined classification categories based on the KPIs; receive new building equipment data; determine a health classification of building equipment using the trained classifier; and display the health classification via a user interface.

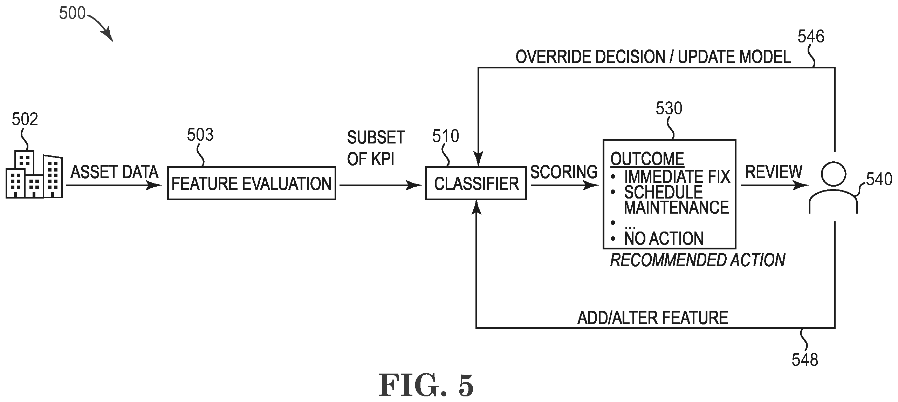

FIG. 5 is an example of a flow diagram 500 showing another illustrative process for domain knowledge and machine-learning-based classification of building equipment health. At 502, performance data from one or more data sources can be received, as described herein. A plurality of KPIs can be generated from the performance data, as described herein.

At 504, a selection of a subset of the plurality of KPIs can be received. For example, the selection can be a manual selection of the subset of the KPIs (e.g., selection by an operator from a list of all the KPIs, etc.), though there are potential pathways for automation of the subset selection. Notably, the manual KPI selection process intentionally leverages human expertise rather than relying on automated methods e.g., which may be prone to issues such as overfitting the classification model. For instance, domain experts (e.g., operators) can identify which physical parameters are relevant for specific types of equipment faults based on their knowledge of HVAC systems. For example, experts know that zone temperature and setpoint relationship is critical for assessing temperature control performance, while pressure differentials across filters indicate filter condition. These selected parameters are then transformed into physics-based KPIs that normalize the raw data into meaningful indicators and/or are selected by the experts for use in categorizing the health of the specific types of equipment in the HVAC system. The manual selection process allows incorporation of contextual understanding that automated methods would miss (e.g., zone air temperature does not significantly depend on zone air pressure, etc. Hence, this and similar physical independence or dependence of component performance is something domain experts understand but purely data-driven approaches might miss, potentially creating spurious correlations. As such, the system and methods herein provide several benefits including preservation of domain expertise that is gradually disappearing from the industry, more efficient machine learning by encoding physics principles into the features, creation of interpretable features that align with how technicians think about systems, and avoidance of training models on physical principles that are already well understood.

The selected KPIs (as selected at 503) can be used to query the classifier, as indicated at 510. In response, the classifier can classify the health of the building equipment associated with the selected KPIs as one or more predefined classification categories such as initiate no action, schedule maintenance, initiate an immediate action, and/or conduct review.

The classified health status (e.g., schedule maintenance) of the building equipment can be displayed or otherwise presented to a user (e.g., displayed via a console for an operator), as indicated at 530.

In some embodiments, when the systems herein classify equipment health into categories such as "no action," "plan maintenance," or "immediate action," operators can be provided with a prompt or other mechanism to elicit feedback from the operator regarding the accuracy of these classifications. This feedback can take the form of confirming or correcting the suggested action category, etc. Again, the prompts to the operator can be predefined prompts "agree" or "disagree" with the classification thereby creating a structured data set that can be readily used to train or retrain models such as those described herein. Additionally, the feedback implementation described herein is deliberately designed with usability in mind. Since many operators manage multiple facilities (sometimes 10-30 buildings) and may not have detailed knowledge of specific equipment issues, the system first implements a simplified feedback approach. Operators can initially provide basic validation such as agreeing or disagreeing with the recommended classification without requiring detailed technical explanations. This approach acknowledges the practical constraints on operator time and expertise while still capturing valuable feedback data. As operators build confidence in the system, they may progress to providing more detailed information through additional structured inputs and/or unstructured inputs (e.g., free-text inputs such as those providing additional details about a current real-time health status of building equipment responsive to a prompt).

The systems herein can incorporate this feedback through a sophisticated model retraining process. For instance, when an operator, as represented by element 540, confirms or overrides a classification decision, this information can be fed back into the machine learning training process, allowing the classifier to continuously adapt, as indicated at 546. Each validation interaction becomes a new training example that pairs the set of KPI features with the correct classification outcome. The technical implementation includes pathways for both immediate feedback processing and long-term model enhancement, as illustrated in FIG. 5 where both "Override decision / update model", as indicated at 546, and "Add/alter feature", as indicated at 548, feedback loops are implemented. In some embodiments, the feedback loops herein can operate across two distinct timeframes. In the short term, operators provide immediate classification feedback that refines the existing model parameters, steadily improving accuracy within the current feature framework. In the long term, as the system accumulates performance data across many feedback cycles, knowledgeable users can analyze patterns to identify opportunities for more substantial enhancements, including the addition or modification of KPI features themselves. This dual feedback approach allows both incremental improvement and structural evolution of the systems and methods herein. The feedback mechanism also serves as a domain knowledge preservation tool. As experienced technicians interact with the system, their expertise is encoded into the model through their feedback on classifications. This addresses a key challenge identified in the industry in that domain expertise in HVAC systems and other types of systems is gradually disappearing as experienced technicians retire. By capturing their decision-making patterns through feedback, the system helps preserve this institutional knowledge in a form that can be applied consistently across buildings even after those experts are no longer available. From an implementation perspective, the feedback capability can be integrated into the user interface as acknowledgment buttons or similar controls that make providing feedback a natural part of the operator's workflow. The system is also designed to accommodate different levels of operator engagement with the feedback process, recognizing that complete feedback on every classification may not be practical in real-world environments. Through this multi-layered feedback approach, the system achieves continuous self-improvement, enhanced accuracy, preservation of domain expertise, and better adaptation to the unique characteristics of specific buildings and equipment, all while maintaining a practical interface that accommodates the real-world constraints of building management operations.

An example method incorporating feature selection (e.g., manual feature selection) comprises receiving a comprehensive set of building equipment telemetry data; generating a plurality of domain knowledge-based KPIs from the telemetry data, where the KPIs incorporate physics-based relationships between building equipment parameters; presenting a feature selection interface to a domain expert user. The interface can be configured to display the generated domain knowledge-based KPIs, provide information about physical independence and dependence relationships between the KPIs, and/or can permit the domain expert user (e.g., an operator) to manually select a subset of KPIs relevant for detecting specific types of equipment faults. The method can further include storing the domain expert user's KPI selections in association with specific fault types, receiving new building equipment telemetry data; generating the selected subset of domain knowledge-based KPIs from the new telemetry data; classifying building equipment health status using a classifier trained on the domain expert-selected subset of KPIs; and generating a maintenance recommendation based on the classification. This is merely an example of a method incorporating feature selection (i.e., KPI selection).

Some elements and/or interconnections in various Figures such as Figures 1-5 may be omitted for ease of illustration.

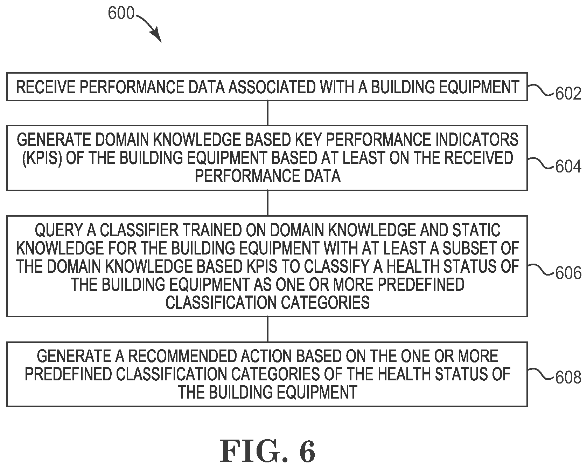

FIG. 6 is a flow diagram showing an illustrative method 600 for domain knowledge and machine-learning-based classification of building equipment health. At 602, the method 600 includes receiving, by a computing device (e.g., computing device 200 as described with respect to FIG. 2) of a building management system, actual performance data associated with building equipment at a site (e.g., managed by the BMS) for a time period, as described herein. Examples of actual performance data include temperature data (e.g., zone temperate readings, temperature change rates, etc.), air flow and pressure data (e.g., cooling valve position measurements, air pressure readings, air flow readings, filter pressure drop measurements, etc.), system operational data (e.g., equipment on/off status, frequency of on/off cycles, time to reach a setpoint, etc.), and/or environmental quality data (e.g., air quality sensor readings such as CO2 readings, humidity measurements, etc.), among other types of actual performance data.

At 604, the method 600 can include generating domain knowledge based KPIs of the building equipment based at least on the received actual performance data, as described herein. For instance, the KPIs can indicate any difference between the received actual performance data (i.e., telemetry data) and a target value (i.e., a setpoint or a threshold/percentage difference from a set point), among other possibilities. The target values can be predetermined values such as those that are configured when onboarding building equipment and/or those that are configured subsequently (e.g., by an operator, system administrator, etc., using the computing device 200 described with respect to FIG. 2), or that are otherwise configured as the target value. As an example, a difference between an actual zone temperature and setpoint can be normalized as a domain knowledge based KPI where: zero indicates proper operation and larger values can be scaled to indicate a severity of the deviation of the actual zone temperature from the setpoint, etc. Other examples of domain knowledge-based KPIs include those indicative of a rate of temperature change after setpoint adjustments (e.g., expected to be 2-3°C per hour), patterns indicating unstable control (oscillations around setpoint), evidence of clogged filters (e.g., detecting large pressure differentials), and/or equipment cycling excessively, among other possible values. That is, the telemetry data received at 602, can be transformed at 604 into physics-based KPIs that intrinsically incorporate domain expertise. This approach leverages existing domain knowledge about what constitutes normal vs. problematic HVAC operation, making the AI classification more efficient and interpretable than approaches that apply AI directly to raw telemetry data.

For instance, at 606, the method can include querying a classification model (i.e., a classifier) trained on domain knowledge and static knowledge for the building equipment with at least a subset of the domain knowledge based KPIs to classify a health status of the building equipment as one or more predefined classification categories. As mentioned, in some embodiments the domain knowledge on which the classifier is trained can include a history of the building equipment, an expected performance of the type of building equipment, feedback from an operator associated with the building equipment, annotated data from the building equipment, or any combination thereof.

In some embodiments, the method can include receiving a selection of a subset of the KPIs. The method 600 can permit manual selection of the subset of the KPIs (e.g., selection by an operator from a list of all the KPIs, etc.), though there are potential pathways for automation of the subset selection. Notably, the manual KPI selection process intentionally leverages human expertise rather than relying on automated methods e.g., which may be prone to issues such as overfitting the classification model. For instance, domain experts (e.g., operators) can identify which physical parameters are relevant for specific types of equipment faults based on their knowledge of HVAC systems. For example, experts know that zone temperature and setpoint relationship is critical for assessing temperature control performance, while pressure differentials across filters indicate filter condition. These selected parameters are then transformed into physics-based KPIs that normalize the raw data into meaningful indicators and/or are selected by the experts for use in categorizing the health of the specific types of equipment in the HVAC system. The manual selection process allows incorporation of contextual understanding that automated methods would miss (e.g., zone air temperature does not significantly depend on zone air pressure, etc. Hence, this and similar physical independence or dependence of component performance is something domain experts understand but purely data-driven approaches might miss, potentially creating spurious correlations. As such, the system and methods herein provide several benefits including preservation of domain expertise that is gradually disappearing from the industry, more efficient machine learning by encoding physics principles into the features, creation of interpretable features that align with how technicians think about systems, and avoidance of training models on physical principles that are already well understood.

In any case, the classifier can be trained to output, responsive to being queried with one or more domain knowledge based KPIs, a classification of a health status of the building equipment in the form of one or more predefined classification categories. As an example, the one or more predefined classifications can include a "No action" classification, which indicates that the building equipment (e.g., HVAC equipment) is operating within expected parameters based on the domain knowledge-based KPIs. This classification signals to facility managers and technicians that the equipment is functioning properly and requires no intervention at the current time. The system determines this classification when all relevant operational and capital savings indicators fall within acceptable ranges. Another example classification is "Plan maintenance" (i.e., "Schedule maintenance"). This classification indicates that while the equipment is currently functioning adequately, certain KPIs show early signs of degradation that warrant scheduled, non-urgent maintenance. This allows facility teams to proactively plan maintenance activities before problems escalate to critical levels, extending equipment life and avoiding emergency repairs. Another example classification is "Immediate action" (i.e., "Immediate fix") which represents a critical assessment that one or more domain knowledge-based KPIs have deteriorated to a point requiring urgent attention. This classification triggers priority maintenance activities to prevent equipment failure, comfort issues, or inefficient operation that could lead to increased operational costs or reduced asset lifespan. Another classification is "Need review", which indicates situations where the classifier has detected anomalies in the KPIs that don't clearly fall into other categories and require further human investigation. This classification may occur with unusual combinations of KPI values or conditions the system hasn't encountered during its training period. The need review classification acknowledges the importance of human expertise for complex and/or edge cases. These classifications provide several advantages over traditional percentage-based health scores. The classifications translate directly into specific maintenance actions, making it easier for staff to prioritize and schedule work. The categorical system also makes it easier for users to provide feedback on classification accuracy by confirming or correcting the suggested action category. This feedback loop is integral to the system's continuous improvement mechanism, helping it refine its assessments over time.

At 608, a recommended action can be generated based on the one or more predefined classification categories of the health status of the building equipment. Examples of suitable predefined classification categories include initiate no action, schedule maintenance, initiate an immediate action, and conduct review, among other possible categories.

In some embodiments, one or more of the one or more predefined classification categories can be indicative of a current or predicted (future) occurrence of a building equipment issue with the building equipment. Stated differently, the classifier can be trained to classify the health of the building equipment and thereby can also identify, in some instances, an occurrence of a current or predicted issue with the building equipment. For instance, "immediate fix" and/or "plan maintenance" categorization by the classifier can indicate the presence of a current or predicted occurrence of a building equipment issue. Whether the building equipment health is categorized as an immediate fix or plan maintenance can depend on a severity of any degradation of the health of the building equipment, a criticality of the building equipment, among other possible considerations. Hence, having the classifier trained on static knowledge in additional to the domain knowledge can yield improved categorization of building equipment health (e.g., improved detection of current or predicted building equipment issues), as compared to other approaches that do not account for both domain knowledge and static knowledge.

In some embodiments, a given classification such as "immediate fix" can cause initiation (e.g., automatic initiation) of the recommended action. For instance, the 'immediate fix' classification can cause the automatic issuance of an electronic ticket and/or can cause issuance of an alert (e.g., alerting on operator or technician of the presence of the 'immediate fix' classification for the building equipment. Hence, the systems and methods herein can readily identify and address current building equipment issues. Additionally, the system and methods can predict and mitigate occurrence of future building equipment issues. For instance, a given classification such as "Plan maintenance" can be indicate that building equipment is function adequately but may need maintenance another type of remediation measure (e.g., a change in a related set point) to continue to function adequately and/or to improve the functioning of the building equipment. In some embodiments, the method 600 can include displaying via a computing device a recommendation such as a recommendation for one or manual remediations (e.g., when a building equipment failure is not amenable to an automatic remediation). Examples of remediation actions which can be recommended including cleaning and/or lubricating building equipment, altering one or more set points of equipment, altering equipment (e.g., replacing one or more components of the building equipment), altering an alarm sequence, and/or altering a type and/or quantity of alarms, etc. These are merely examples and other remediation actions such as those that are typically performed in accordance with sites managed by a BMS may be performed.

In some embodiments, the method 600 can include root cause analysis of the current or predicted issue with the building equipment. The root cause determination aspect of the domain knowledge-based HVAC health classification system represents a sophisticated analytical capability that extends beyond basic health status classification. When the system identifies a performance issue with building equipment through its classification process, it employs specialized techniques to determine the underlying causes rather than merely flagging that a problem exists. The system approaches root cause determination through a two-step process. First, it identifies that something does not operate as expected (classification), and second, it determines what the specific root cause is - essentially what needs to be fixed in the system. This root cause analysis is performed after the initial classification indicates a potential issue, such as when equipment is categorized as needing "schedule maintenance" or "immediate action." The root cause determination leverages regression analysis models specifically trained on domain knowledge for the building equipment. Unlike the classification model that categorizes overall health status, the regression model is designed to analyze the relationships between various domain knowledge-based KPIs to identify specific failure patterns. The model examines how different operational indicators interact and deviate from expected values, applying physics-based understanding that has been encoded into the KPIs themselves.

For example, when analyzing an air handling unit, the regression model might identify that while multiple indicators show problems (temperature differential, air pressure, valve position), the root issue stems specifically from a clogged filter based on the particular pattern of deviations across these interdependent metrics. The system can make this determination because the domain knowledge-based KPIs already incorporate understanding of how these parameters should relate to each other under normal and various fault conditions. Importantly, the system can perform temporal root cause analysis as well. The regression models not only identify what fault was detected, but can also determine when the fault happened or predict when it might happen in the future if current trends continue. This temporal dimension is crucial for effective maintenance planning and prevention of equipment failure.

In some embodiments, determination of the building equipment failures and/or the respective priority of each of the building equipment failures (and hence the respective priorities of the corresponding remediation actions) can be based on: a building equipment hierarchy, a criticality of the building equipment having the predicted failure, an impact of the predicted failure on upstream and/or downstream building equipment, a quantity of hours of operation of the building equipment with the predicted failure, a degree of deviation of the building equipment from a set point of the building equipment, and a historical failure frequency of the building equipment having the predicted failure, or any combination thereof.

For instance, a building equipment hierarchy can be determined and/or received (e.g., from BMS data and/or EBI, etc.). The building equipment hierarchy can include information indicative of upstream and downstream building equipment included in the building equipment hierarchy. In some embodiments, the hierarchy can be determined based on BMS data (e.g., based on telemetry data received from one or more sensors in a BMS system) and/or can be determined based on one or more manual inputs (e.g., a manual input provided via a computing device as described herein the indicates the relative position of building equipment within a hierarchy). For instance, equipment that is downstream and/or upstream relative to a building equipment may be identified as a source or root cause of another building equipment failure.

The root cause analysis capability benefits from the feedback loop built into the system. As technicians confirm or correct the identified root causes and document the actual fixes implemented, this information is fed back into the model, improving its accuracy over time. This continuous learning process allows the system to become increasingly sophisticated at identifying complex and subtle root causes that might elude less experienced human operators. The root cause determination component outputs specific recommendations based on its analysis, providing actionable guidance rather than merely flagging issues. These recommendations reflect the system's understanding of not just what is wrong, but why it is wrong and what specific maintenance actions would best address the underlying cause rather than just the symptoms. By combining domain expertise encoded in KPIs with machine learning techniques, the root cause determination capability helps preserve valuable HVAC system knowledge that might otherwise be lost as experienced technicians retire, while making this expertise more widely available and consistently applied across building operations.

An example system for determining root causes of building equipment issues, comprising: a processor; a memory storing non-transitory instructions which are executable by the processor to: receive building equipment operational data; generate domain knowledge-based KPIs based on the received building equipment operational data, wherein the KPIs incorporate physics-based understanding of relationships between operational parameters; detect an anomaly in building equipment operation by comparing the domain knowledge-based KPIs to expected values; execute a regression analysis model trained on historical domain knowledge-based KPIs and building equipment fault data to: determine a specific root cause of the detected anomaly; identify when the fault leading to the anomaly first occurred; and predict future progression of the anomaly if not addressed. Continuing with the above example, the system can be configured to apply static building equipment information including equipment criticality, type, and location to prioritize the detected anomaly; generate a recommended remediation action specifically addressing the determined root cause; and display the recommended remediation action with an explanation of the root cause determination.

In some embodiments, the method 600 can include receiving user feedback e.g., of the one or more categories assigned by the classifier to the health of the building equipment, to a recommended action, feedback on an identified root cause, and/or feedback based on effectiveness of any remediation action conducted based on the one or more categories and/or the recommended action, as described herein. The classifier can then be retrained based on the feedback (e.g., provided by an operator) to further enhance the effectiveness of the classifier such as when assigning one or more categories to classify the health of the building equipment, etc.

Aspects of the illustrative methods herein can be performed with or via one or more of the components described herein. For instance, the illustrative methods herein can be performed in conjunction with or by at least a computing device (e.g., computing device 200), among other possible components.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in detail, particularly in matters of shape, size, arrangement of parts, and exclusion and order of steps, without exceeding the scope of the disclosure. The disclosure's scope is, of course, defined in the language in which the appended claims are expressed.

## Claims

1. A method for domain knowledge and machine-learning-based classification of building equipment health, the method comprising:
receiving actual performance data associated with a building equipment;
generating domain knowledge based key performance indicators (KPIs) of the building equipment based at least on the received actual performance data;
querying a classifier trained on domain knowledge and static knowledge for the building equipment with at least a subset of the domain knowledge based KPIs to classify a health status of the building equipment as one or more predefined classification categories, wherein the domain knowledge includes one or more of a history of the building equipment, an expected performance of the type of building equipment based on the domain knowledge KPI, feedback from an operator associated with the building equipment, annotated data from the building equipment, or any combination thereof; and
generating a recommended action based on the one or more predefined classification categories of the health status of the building equipment.

2. The method of any preceding claim, further comprising receiving user feedback on classified health status of the building equipment.

3. The method of claim 2, further comprising retraining the classifier based on the received user feedback.

4. The method of any preceding claim, wherein the classifier further comprises a supervised machine-learning model.

5. The method of claim 4, further comprising training the supervised machine-learning model based on the domain knowledge by:
prompting a user with one or more predefined questions related to a status of the building equipment at a given time;
receiving user input responsive to the one or more predefined questions; and
training the supervised model based on:
the received user input; and
corresponding operational parameters associated with the building equipment at the given time.

6. The method of any preceding claim, wherein the domain knowledge based KPIs include operational savings indicators, capital savings indicators, or both.

7. The method of any preceding claim, wherein the one or more predefined classification categories comprise: initiate no action, schedule maintenance, initiate an immediate action, and conduct review.

8. The method of any preceding claim, further comprising:
identifying, with the classifier, an occurrence of a current or predicted issue with the building equipment; and
performing, with a regression analysis model, root cause analysis of the current or predicted issue with the building equipment.

9. The method of any preceding claim, further comprising training the classifier with static building equipment parameters including building equipment criticality, building equipment type, building equipment location, building equipment size, or any combination thereof.

10. The method of any preceding claim, further comprising initiating performance of the recommended action.

11. The method of any preceding claim, further comprising retraining the classifier based on feedback associated with initiating the recommended action.

12. A system for domain knowledge and machine-learning-based classification of building equipment health, the system comprising:
a processor; and
a memory storing non-transitory instructions which are executable by the processor to:
train a classifier with domain knowledge associated with building equipment and static knowledge associated with the building equipment, wherein the static knowledge includes one or more building equipment parameters including building equipment criticality, building equipment type, building equipment location, building equipment size, or any combination thereof;
receive building equipment data including operational parameters associated with the building equipment;
generate domain knowledge-based key performance indicators (KPIs) of the building equipment based at least on the received building equipment data;
receive a selection of a subset of the domain knowledge-based KPIs;
query a classifier trained on domain knowledge and static knowledge for the building equipment with the subset of the domain knowledge based KPIs to classify a health status of the building equipment as one or more predefined classification categories; and
generate a recommended action based on the one or more predefined classification categories of the health status of the building equipment.

13. The system of any preceding claim2, wherein the instructions further comprise instructions to:
receive from a user a selection of the one or more of the KPIs; and
subsequent to receipt of the selection, query the classifier with one or more of the domain knowledge based KPIs to classify a health status of the building equipment as one or more predefined categories.

14. The system of any preceding claim3, wherein the one or more domain knowledge-based KPIs selected by the user additionally include static knowledge selected by the user.

15. A non-transitory medium storing one or more programs including instructions which, when executed by a processor of a device, cause the device to:
receive building equipment data including operational parameters associated with an building equipment;
generate domain knowledge-based key performance indicators (KPIs) of the building equipment based on the received building equipment data;
receive a user selection of one or more of the domain knowledge-based KPIs;
query a classifier trained on domain knowledge and static knowledge for the building equipment with the selected one or more of the domain knowledge-based KPIs to classify a health status of the building equipment as one or more predefined categories, wherein:
the domain knowledge is based at least in part based on:
one of more of the domain knowledge-based KPIs; and
periodic feedback received from an operator associated with the building equipment, and
the static knowledge includes an indicator of building equipment criticality, building equipment location, building equipment size, building equipment type, or any combination thereof;
generate a recommended action based on the one or more predefined categories; and acknowledge or initiate performance of the recommended action.
